# EUROPÄISCHE PATENTSCHRIFT

(11) **EP 3 158 614 B1**
(45) Veröffentlichungstag und Bekanntmachung des Hinweises auf die Patenterteilung: **20.04.2022**
(21) Anmeldenummer: 15723939.3
(22) Anmeldetag: 19.05.2015
(51) Int. Cl.: H02G 3/04, H01B 3/44, B29C 48/09, B29C 48/13, B29C 48/00, B29C 48/21, B29C 48/30

(54) **WELLROHR AUS KUNSTSTOFF ZUM UMMANTELN VON LEITUNGEN SOWIE VERFAHREN ZUR HERSTELLUNG EINES SOLCHEN WELLROHRES**
PLASTIC CORRUGATED TUBE FOR SURROUNDING PIPES AND METHOD FOR PRODUCING SUCH A CORRUGATED TUBE
TUBE ONDULÉ EN MATIÈRE PLASTIQUE SERVANT À GAINER DES CONDUITES ET PROCÉDÉ DE PRODUCTION D'UN TUBE ONDULÉ DE CE TYPE

(30) Priorität: 23.06.2014 DE 102014108757
(43) Veröffentlichungstag der Anmeldung: 26.04.2017
(73) Patentinhaber: Delfingen FR-Anteuil S.A., 25340 Anteuil (FR)
(72) Erfinder: CHU, Van-Ngoc, 85586 Poing (DE); BÜTTNER, Matthias, 96106 Ebern (DE)
(74) Vertreter: Horn Kleimann Waitzhofer Patentanwälte PartG mbB
(86) Internationale Anmeldenummer: PCT/EP2015/061018
(87) Internationale Veröffentlichungsnummer: WO 2015/197266

(56) Entgegenhaltungen:
- EP-A1- 2 182 599
- DE-A1- 19 700 916
- DE-A1- 19 705 761
- US-A- 4 986 575
- US-A1- 2005 274 535

## Beschreibung

Die Erfindung bezieht sich auf ein Wellrohr aus Kunststoff zum Ummanteln von Leitungen, mit über seine Länge verteilten, abwechselnd aufeinander folgenden, umlaufenden Wellen sowie mit einem entlang einer Mantellängslinie verlaufenden Längsschlitz, sowie auf ein Verfahren zur Herstellung eines solchen Wellrohres.

Längsgeschlitzte Wellrohre aus Kunststoff sind allgemein bekannt und werden insbesondere zum Ummanteln elektrischer Leitungen, die im Kraftfahrzeugbau verlegt werden, verwendet. Der Längsschlitz dient einem erleichterten Einbringen der Kabel in das Innere der Wellrohre, wobei zu diesem Zweck das betreffende Wellrohr, sei es unter Verwendung spezieller Werkzeuge oder auch manuell, zur Freilegung des Schlitzes gespreizt und dieser soweit geöffnet werden kann, daß die vorbereiteten Kabel bzw. Kabelbäume dort durch den Schlitz eingelegt werden können.

Im in das Fahrzeug eingebrachten Zustand sollen jedoch die Wellrohre mit den ummantelten elektrischen Leitungen so verschlossen sein, daß sie auch einen Schutz vor dem Eindringen unerwünschter Einflüsse (wie Verschmutzung, chemischer oder korrotierende Elemente usw.) bieten.

Um bei solchen Kunststoff-Wellrohren entlang des Längsschlitzes nach dem Einbringen der elektrischen Leitungen einen guten Verschluß der beidseits des Längsschlitzes anliegenden Randbereiche des Wellrohres aneinander zu erhalten, ist eine Vielzahl unterschiedlicher Formgestaltungen bekannt, die ein gegenseitiges Verriegeln dieser Randbereiche in Umfangsrichtung aneinander, sei es durch Formschluß oder durch Verwendung aufgebrachter Verriegelungselemente, für einen guten und wirksamen Verschluß des Wellrohres gestatten (z. B. DE 32 46 594 A1, DE 34 05 552 A1, DE 196 41 421 A1, DE 197 00 916 A1, DE 197 05 761 A1, EP 0 291 418 A1, EP 0 860 921 A1, EP 2 182 599 A1, WO 94/11663 A1, US 4,986,575 A, US 2005/274535 A1, US 6,079,451 A).

Diesen Lösungen ist jedoch gemeinsam, daß ein damit versehener Wellschlauch stets einer bestimmten Nennweite zugeordnet ist, weshalb, falls z. B. für einen Einsatzfall eine etwas größere Nennweite erforderlich wäre, ein auch speziell für diese Nennweite ausgelegter Wellschlauch eingesetzt werden muß.

Ausgehend hiervon liegt der Erfindung die Aufgabe zugrunde, einen Wellschlauch der eingangs genannten Art vorzuschlagen, der für einen gewissen Bereich an Nennweiten einsetzbar ist, ohne daß er hierfür modifiziert werden muß, wodurch sich ein deutlich erweiterter Einsatzbereich und eine günstigere Lagerhaltung sowie als Folge hiervon eine größere Wirtschaftlichkeit beim Einsatz ergibt.

Weiterhin soll auch ein Herstellverfahren zur Herstellung eines solchen Wellrohres vorgeschlagen werden.

Erfindungsgemäß wird die erstgenannte Aufgabe gelöst durch ein Wellrohr aus Kunststoff zum Ummanteln von Leitungen, mit über seine Länge verteilten, abwechselnd aufeinander folgenden Wellen, d. h. Wellenbergen und Wellentälern, sowie mit einem entlang einer Mantellängslinie verlaufenden Längsschlitz, wobei das Wellrohr zum Einlegen der Leitungen unter Freigabe des Längsschlitzes in eine geöffnete Stellung und ferner in eine Verschlußstellung überführbar ist, in der sich die beidseits des Längsschlitzes liegenden Randbereiche des Wellrohres überdecken, wobei das Wellrohr in Richtung auf die Einnahme seiner Verschlußstellung hin elastisch vorgespannt ist, und der Randbereich des Wellrohres, der in Verschlußstellung radial unterhalb des anderen Randbereiches dieses Wellrohres liegt, über einen vorgegebenen Umfangsbereich, der einem maximalen Überdeckungsbereich beider Randbereiche in der Verschlußstellung entspricht, an seinem Umfang ebenfalls mit Wellen versehen ist, die aber im Vergleich zu den Wellen außerhalb des vorgegebenen Umfangsbereiches um einen Abstand radial zu einem Inneren des Wellrohres hin versetzt sind, so dass eine radiale Unterseite von Wellentälern der Wellen innerhalb eines bestimmten Umfangsbereiches etwas in das Innere des Wellrohres hin vorspringt, und wobei die Wellen so ausgebildet sind, daß sie in der Verschlußstellung mit der radialen Unterseite der Wellen am anderen Randbereich in Eingriff stehen, die sie in Umfangsrichtung relativ zueinander verschieblich übergreifen.

Bei dem erfindungsgemäßen Wellrohr werden nach Einlegen der elektrischen Leitungen in das Innere des Wellrohres die beidseits des Längsschlitzes liegenden Randbereiche des Wellrohrmantels in eine sich überdeckende Verschlußstellung gebracht, in welcher der Längsschlitz durch diese Überdeckung der Randbereiche verschlossen wird. An diesen sich überdeckenden Randbereichen sind jedoch keine Verschlußelemente angebracht, die in der Schließstellung miteinander in einen verriegelnden Eingriff treten und so die beiden Randbereiche aneinander befestigen. Vielmehr wird bei dem erfindungsgemäßen Wellrohr das konstruktive Prinzip eingesetzt, daß bei ihm in seiner Verschlußstellung die sich überdeckenden Randbereiche in ihre Verschlußstellung und damit in Richtung auf eine gegenseitige Überlappung hin nur elastisch vorgespannt sind. Dabei werden unter Aufhebung des Längsschlitzes die beiden Randbereiche in eine sich zur Einnahme einer Verschlußstellung überlappende gegenseitige Anordnung unter Einwirkung dieser elastischen Vorspannung überführt und in dieser durch die Vorspannung selbsttätig gehalten, ohne daß es hierfür des Einsatzes ineinander verrastend eingreifender Verschlußelemente bedarf.

In der Verschlußstellung liegt dabei der eine der beiden Randbereiche des Wellrohres radial unterhalb des anderen Randbereiches, wobei der radial unterhalb liegende Randbereich nachfolgend als *"unterer"* Randbereich und der auf ihm radial aufliegende Randbereich als *"oberer"* Randbereich bezeichnet wird. Dabei sind an dem unteren Randbereich über einen vorgegebenen Umfangsbereich desselben hinweg an dessen Umfang Wellen (in Form von Wellenbergen und Wellentälern) angebracht, die aber relativ zu den Wellen außerhalb dieses vorgegebenen Umfangsbereiches (die auch denen am anderen Randbereich entsprechen) radial nach innen versetzt sind. In der Verschlußstellung liegen die Wellen des unteren Randbereiches gegen die radiale Unterseite der Wellen am anderen, oberen Randbereich an und stehen mit diesen in Eingriff, wobei sie von letzteren in Umfangsrichtung überdeckt werden und dabei die Wellen beider Randbereiche in Umfangsrichtung des Wellrohres relativ zueinander verschieblich sind.

Dadurch, daß die Wellen des unteren und des oberen Randbereiches dann, wenn der letztere den ersteren in Umfangsrichtung des Kunststoffrohres überdeckt, miteinander, und zwar relativ zueinander verschieblich, in Eingriff stehen, läßt sich nach Einbringen der elektrischen Leitungen durch den Längsschlitz in das Innere des erfindungsgemäßen Wellrohres erreichen, daß durch Freigabe der Randbereiche in Folge der elastischen Vorspannung, die an letzteren in Richtung auf eine Verschlußstellung hin laufend wirkt, selbsttätig ein Aufschieben des oberen Randbereiches auf den unteren Randbereich in Umfangsrichtung des Wellrohres so lange eintritt, bis schließlich die Verschlußstellung erreicht ist. Diese Verschlußstellung wird dabei vorgegeben von der Menge der über den Längsschlitz in das Innere des Wellrohres eingebrachten elektrischen Leitungen: Sind nur vergleichsweise wenige Leitungen im Rohr verlegt, wird die Verschlußstellung dadurch erreicht, daß der obere Randbereich über den gesamten vorgegebenen Umfangsbereich am unteren Randbereich hinweg dessen radial etwas nach unten versetzte Wellungen überdeckt, die nur in diesem Umfangsbereich vorliegen und an die sich dann im weiteren Umfangsverlauf des Wellrohres die Wellungen anschließen, die radial weiter außen liegen und bis zum Ende des anderen Randbereiches durchlaufend ausgeführt sind. Am Ende des vorgegebenen Umfangsbereiches mit seinen radial tiefer liegenden Wellen wird allerdings der obere Randbereich, der unter Einwirkung der elastischen Vorspannung die gegenseitige Überdeckung selbsttätig fortführt, an einer weiteren Verschiebung auf dem unteren Randbereich in Umfangsrichtung gehindert, weil die am unteren Randbereich sich dort dann anschließenden Wellen wieder radial nach außen hin versetzt sind, so daß sich an dieser Übergangsstelle damit für den oberen Randbereich ein mechanischer Anschlag gegen eine weitere Relativverschiebung in Umfangsrichtung ergibt.

Ist jedoch in das Innere des Wellrohres eine größere Menge elektrischer Leitungen eingebracht, die somit auch einen größeren Platzbedarf im Inneren des Wellrohres benötigt, der einer größeren Rohr-Nennweite entspricht, kann der obere Randbereich bei Freigabe der beiden Randbereiche unter der elastischen Vorspannung in Richtung auf eine Verschlußstellung hin nicht mehr in Umfangsrichtung so weit auflaufen, daß eine Überdeckung beider Randbereiche über den gesamten vorgegebenen Umfangsbereich hinweg stattfindet. Vielmehr wird hier die Verschlußstellung schon bei Erreichen einer kleineren Überdeckungsstrecke beider Randbereiche erreicht, wie sie durch die größere Füllung des Innenraums des Wellrohres mit elektrischen Leitungen beim Verschließen des Wellrohres eben noch möglich ist.

Damit schafft das erfindungsgemäße Wellrohr die Möglichkeit, über einen gewissen Bereich unterschiedlicher Nennweiten hinweg eingesetzt werden zu können, ohne daß eine Modifikation des erfindungsgemäßen Wellrohres erfolgen muß. Die Variationsbreite des Einsatzes hängt dabei wesentlich von der Größe des vorgegebenen Umfangsbereiches mit dessen radial nach innen versetzten Wellen ab, wobei bei herkömmlichen Wellrohrgrößen ein Bereich von zwei oder drei Nennweiten, z. B. 17 und 18 oder 17 bis 19, unschwer realisierbar ist.

Der vorgegebene Umfangsbereich entspricht daher der maximal möglichen Überdeckung der beiden Randbereiche des Wellrohres, also der kleinsten einsetzbaren Nennweite bei Füllung.

Gleichzeitig entfällt bei dem erfindungsgemäßen Wellrohr aber auch die Notwendigkeit, die einander gegenüberstehenden Randbereiche beidseits des Längsschlitzes in der Verschlußstellung aneinander zu verriegeln, was eine aufwendigere Herstellung und eine Verkomplizierung bei der Durchführung des Verschlusses vermeidet. Vielmehr ergibt sich bei der Erfindung ein selbstschließender und sehr variabel einsetzbarer Wellschlauch, was gegenüber Wellschläuchen, die in ihrer Verschlußstellung die Verwendung aneinander in Umfangsrichtung verriegelbarer Verschlußelemente bedingen, sowohl herstellungstechnisch, wie auch montageseitig deutliche Vorteile ergibt.

In einer besonders bevorzugten Ausgestaltung der Erfindung sind die in Eingriff miteinander befindlichen Wellen der beiden Randbereiche des Wellrohres entlang dem Längsschlitz bei einer Verschiebebewegung relativ zueinander in Verschieberichtung formschlüssig aneinander geführt, wodurch gut verhindert wird, daß die den Längsschlitz begrenzenden Randbereiche sich in Achsrichtung des Wellrohres gegeneinander verschieben können, was am abgeschnittenen Rohrende das Auftreten scharfkantiger Randteile, die dort überstehen und im Inneren liegende Leitungen beschädigen könnten, verhindert.

Gleichermaßen vorteilhaft ist es bei dem erfindungsgemäßen Wellrohr auch, wenn seine Innenfläche mit einer Schicht aus einem Material versehen ist, das weicher als das sonstige Material des Wellrohres ist.

Eine weitere vorteilhafte Ausgestaltung der Erfindung besteht auch darin, daß bei dem erfindungsgemäßen Wellrohr der in der Verschlußstellung radial untere der beiden Randbereiche an seinem unmittelbar neben dem Längsschlitz liegenden Endabschnitt aus einem Material besteht, das weicher als das sonstige Material des Wellrohres ist.

In den oben genannten Fällen, bei denen neben dem Material des Wellrohres auch noch ein weicheres Material am Wellrohr eingesetzt wird, wird als weicheres Material bevorzugt ein thermoplastisches Elastomer (TPE) mit einer Shore-A-Härte von kleiner als 80 und für das sonstige Material des Wellrohres Polypropylen mit einer Shore-D-Härte von mehr als 60 eingesetzt.

Die Ausbildung des in der Verschlußstellung radial unteren der beiden Randbereiche an seinem unmittelbar neben dem Längsschlitz liegenden Endabschnitt aus einem weicheren Material als das sonstige Material des Wellrohres führt dazu, daß sein frei vorstehendes Ende eine Seite des Längsschlitzes ausbildet, in der Verschlußstellung radial etwas in das Innere des Wellrohres vorragt und durch seine dort dann gegebene Ausbildung aus einem weicheren Material auch eine weiche Schlitzkante bildet, wodurch eine Beschädigung der aufgenommenen elektrischen Leitungen gut verhindert wird.

Die Erfindung bezieht sich weiterhin auch noch auf ein Verfahren zur Herstellung erfindungsgemäßer Wellrohre, wie sie vorstehend beschrieben sind, das folgende Verfahrensschritte umfaßt:
- aus einem Extruder wird kontinuierlich ein Rohr aus geeignetem thermoplastischen Kunststoff (etwa aus PP) extrudiert;
- das extrudierte Rohr wird in einem nachgeschalteten Corrugator zu einem Wellrohr mit Wellen am Umfang verformt, das auf einer Seite einer Mantellängslinie über einen vorgegebenen Umfangsbereich hinweg Wellen aufweist, die gegenüber den Wellen außerhalb dieses vorgegebenen Umfangsbereiches um einen Abstand radial zu einem Inneren des Wellrohres hin versetzt sind, so dass eine radiale Unterseite von Wellentälern der Wellen innerhalb eines bestimmten Umfangsbereiches etwas in das Innere des Wellrohres hin vorspringt;
- das Wellrohr wird in einer dem Corrugator nachgeschalteten Schlitzvorrichtung mit einem entlang der Mantellängslinie verlaufenden Längsschlitz versehen;
- anschließend wird das längsgeschlitzte Wellrohr durch eine IR-Verformungsanlage geführt, in der es unter Erhitzung auf eine unterhalb der Schmelztemperatur des thermoplastischen Kunststoffs liegende Temperatur unter Überdeckung der beidseits des

Längsschlitzes liegenden Randbereiche des Wellrohres stufenweise in eine vorgegebene

Verschlußstellung gebracht wird, so dass die beidseits des Längsschlitzes liegenden Randbereiche derart miteinander in Eingriff kommen, dass sie in Umfangsrichtung relativ zueinander verschieblich sind;
- direkt nach Überführung des Wellrohres in die vorgegebene Verschlußstellung in der IR-Verformungsanlage wird das Wellrohr einem anschließenden Kühlsystem zugeführt und dort abgekühlt;
- anschließend wird das Wellrohr als Meterware aufgewickelt oder in vorgegebene Abschnitte abgeschnitten.

Bei dem erfindungsgemäßen Verfahren erfolgt nach der Extrusion und der Formgebung im Corrugator das Anbringen des Längsschlitzes entlang der Mantellängslinie, auf deren einer Seite über einen vorgegebenen Umfangsbereich hinweg am Außenumfang des Wellrohres Wellen angebracht sind, die gegenüber den anderen Wellen radial nach innen hin versetzt sind. Der Längsschlitz wird somit in der Schlitzvorrichtung an der Stelle des Überganges zwischen den Wellen, die radial weiter außen angebracht sind, und denen, die radial nach innen hin versetzt sind, ausgebildet.

In der IR-Verformungsanlage wird eine thermische Deformation des längsgeschlitzten Wellrohres durchgeführt, das auf eine unterhalb der Schmelztemperatur seines thermoplastischen Kunststoffs liegende Temperatur erhitzt wird und unter Durchlauf durch Formungsrollen dabei seine Randbereiche stufenweise übereinander geschoben und relativ zueinander zu einer zunehmenden Überdeckung gebracht werden, bis eine vorgegebene Verschlußstellung (maximale Überdeckung beider Randbereiche) erreicht ist.

Die direkt anschließende Abkühlung des Wellrohres in einem Kühlsystem führt dann zu einem Wellrohr in einer Verschlußstellung mit maximaler Überdeckung der Randbereiche, das in einem anschließenden Schritt als Meterware aufgewickelt oder in vorgegebene Abschnitte abgeschnitten wird.

Zum Einsatz wird das Wellrohr über eine geeignete Vorrichtung in eine Öffnungsstellung aufgespreizt, in welcher der Längsschlitz freigelegt und so weit geöffnet ist, daß die einzubringenden Leitungen eingelegt werden können. Hiernach erfolgt ein selbsttätiges Verschließen des Wellrohres in Folge der elastischen Vorspannung, die es in Richtung seiner Verschlußstellung drückt, welche maximal der Überdeckung beider Randbereiche entspricht, die in der IR-Verformungsanlage bei der Herstellung des Wellrohres diesem aufgeprägt wurde. Wird nun aber eine größere Menge an Leitungen in das geöffnete Wellrohr eingebracht, die einen Platzbedarf hat, der einer größeren Nennweite des Wellrohres entsprechen würde, kommt es beim Zurückfedern der beiden Randbereiche in ihre sich gegenseitig überdeckende Verschlußstellung zu einer geringeren Überdeckung als im vorgenannten Fall, wie sie infolge der nunmehr größeren Befüllung des Wellrohres mit Leitungen wegen des größeren Platzbedarfes derselben im Inneren des Wellrohres noch möglich ist.

Die bei der Herstellung des Wellrohres bei dessen thermischer Deformation erzielte Verschlußstellung führt beim Aufspreizen des Wellrohres zum Einlegen von Leitungen zu einer starken elastischen Vorspannung in Richtung auf die Verschlußstellung hin, was bei mit Leitungen befülltem Wellrohr einen sicheren und wirksamen Verschluß desselben in der Verschlußstellung ergibt, so daß auch nach dessen Montage noch eine dauerhafte Fixierung und ein guter Schutz gegen unerwünschtes Eindringen von Schmutzpartikeln o. ä. erreicht wird.

Eine ganz besonders günstige Ausgestaltung des erfindungsgemäßen Verfahrens ergibt sich, wenn dem Spritzkopf noch ein zweiter thermoplastischer Kunststoff aus einem zweiten Extruder zugeführt wird, welcher weicher als der vom anderen Extruder zugeführte Kunststoff ist, wobei das aus dem Spritzkopf extrudierte Kunststoffrohr entlang der Mantellängslinie, entlang derer etwas später der Längsschlitz angebracht wird, aus einem sich über eine vorgegebene Umfangsbreite erstreckenden Längsstreifen aus dem weicheren thermoplastischen Kunststoff besteht, während der restliche Mantel des Kunststoffrohres von dem anderen, demgegenüber härteren thermoplastischen Kunststoff gebildet wird. Dabei wird das Einbringen des Längsschlitzes in der Schlitzvorrichtung so vorgenommen, daß dessen Längsseite, die den Wellen des in der Verschlußstellung radial außen liegenden Randbereiches des Wellrohres zugewandt ist, mit der dortigen Endfläche des weicheren Längsstreifens des Kunststoffrohres zusammenfällt und der Längsschlitz in Umfangsrichtung des Kunststoffrohres gesehen mit einer Breite ausgeschnitten wird, die kleiner ist als die vorgegebene Umfangsbreite des weicheren Längsstreifens im Kunststoffrohr. Dabei hat sich für viele Fälle gezeigt, daß es günstig ist, wenn der in der Schlitzvorrichtung an dem Wellrohr ausgebildete Längsschlitz, in der geöffneten Stellung des Wellrohres, in einer Breite von 3 mm bis 5 mm ausgeschnitten wird. Durch die bei dieser Ausgestaltung des erfindungsgemäßen Herstellungsverfahrens eingesetzte zwei Komponenten-Extrusion und die Anbringung des Längsschlitzes im weicheren Bereich des Rohres derart, daß beim Einschneiden des Längsschlitzes nicht der gesamte weichere Bereich ausgeschnitten wird, sondern nur ein Abschnitt, der in Umfangsrichtung kleiner als der am Kunststoffrohr nach der Extrusion ausgebildete weiche Längsstreifen ist, kann ohne großen zusätzlichen Aufwand ein erfindungsgemäßes Wellrohr hergestellt werden, bei dem der in der Verschlußstellung radial untere der beiden Randbereiche an seinem unmittelbar neben dem Längsschlitz liegenden Endabschnitt noch aus dem weicheren Material besteht und somit beim Einsatz eines solchen Wellrohres im Inneren desselben eine weiche Anlaufkante vorliegt, welche eine Beschädigung eingelegter Leitungen so gut wie völlig vermeidet.

In völlig analoger Weise ist es auch möglich, ein erfindungsgemäßes Wellrohr herzustellen, dessen ganze Innenfläche mit einer Schicht aus einem weicheren Material als das sonstige Material des Wellrohres versehen ist, indem hierfür die zwei Komponenten-Extrusion so durchgeführt wird, daß aus dem Extruder ein Kunststoffrohr extrudiert wird, das in radialer Richtung aus einer inneren, weicheren Schicht und einer radial anschließenden äußeren, härteren Schicht besteht, das im nachgeschalteten Corrugator mit den gewünschten Wellungen an seinem Umfang versehen wird und bei dem dann die Anbringung des Längsschlitzes in der Schlitzvorrichtung in derselben Lage erfolgt, wie sie bei einer Einkomponenten-Extrusion vorgenommen wird.

Die Erfindung wird nachfolgend anhand der beigefügten Zeichnungen beispielhalber im Prinzip noch näher erläutert. Es zeigen:
- Fig. 1: eine Perspektivansicht eines erfindungsgemäßen Wellrohres im Zustand unmittelbar vor Anbringung des Längsschlitzes;
- Fig. 2: eine Perspektivdarstellung des Rohres aus Fig. 1 unmittelbar nach Anbringen des Längsschlitzes;
- Fig. 3: eine Perspektivdarstellung des Rohres aus den Figuren 1 und 2 in seiner Verschlußstellung bei maximaler Überdeckung der beidseits des Längsschlitzes liegenden Randbereiche, nach Durchführung der thermischen Deformation;
- Fig. 4: die Einzelheit A aus Fig. 1 in Vergrößerung;
- Fig. 5: die Einzelheit B aus Fig. 2 in Vergrößerung;
- Fig. 6: die Einzelheit C aus Fig. 3 in Vergrößerung;
- Fig. 7: eine Perspektivdarstellung einer anderen Ausführungsform eines erfindungsgemäßen Wellrohres mit einem Längsstreifen in weicherem Material, unmittelbar vor Anbringung des Längsschlitzes;
- Fig. 8: eine Perspektivdarstellung des Wellrohres aus Fig. 7 unmittelbar nach Einbringen des Längsschlitzes;
- Fig. 9: eine Perspektivdarstellung des Wellrohres aus den Figuren 7 und 8 in dessen Verschlußstellung bei maximaler Überdeckung der Randbereiche, nach Durchführung der thermischen Deformation;
- Fig. 10: die Einzelheit D aus Fig. 8 in Vergrößerung;
- Fig. 11: die Einzelheit E aus Fig. 9 in Vergrößerung;
- Fig. 12: eine Perspektivdarstellung eines mit elektrischen Leitungen befüllten erfindungsgemäßen Wellrohres in Verschlußstellung bei maximaler Überdeckung seiner Randbereiche beidseits des Längsschlitzes;
- Fig. 13: das erfindungsgemäße Wellrohr aus Fig. 12, hier jedoch mit einer größeren Füllung aus elektrischen Leitungen in der Verschlußstellung und mit einer geringeren gegenseitigen Überdeckung der Randbereiche als im Fall der Fig. 12;
- Fig. 14: eine prinzipielle Darstellung einer Anlage zur Herstellung erfindungsgemäßer Wellrohre, sowie
- Fig. 15: eine prinzipielle Längsschnittdarstellung durch einen Spritzkopf für eine Zweikomponenten-Coextrusion.

In den Figuren sind, auch bei unterschiedlichen Ausführungsformen, jeweils Teile gleicher Funktion mit gleichen Bezugszeichen versehen.

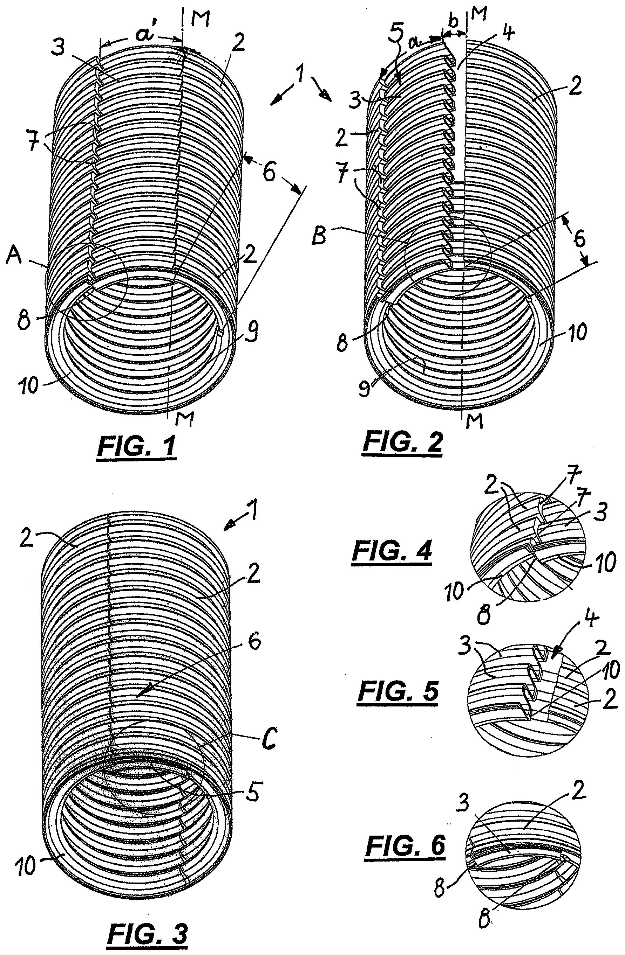

Die Figuren 1 bis 6, 7 bis 9 sowie die Figuren 12 und 13 beziehen sich jeweils auf alternative Ausführungsformen eines erfindungsgemäßen Wellrohres.

Zunächst sei Bezug genommen auf die in den Figuren 1 bis 6 gezeigte Ausführungsform eines Wellrohres 1, wobei in Fig. 1 eine Perspektivansicht eines solchen Wellrohres unmittelbar vor Anbringen eines Längsschlitzes, in Fig. 2 eine Perspektivansicht desselben Wellrohres nach Anbringen des Längsschlitzes 4 und in Fig. 3 eine Perspektivansicht desselben Wellrohres 1 in Verschlußstellung gezeigt ist, wobei sich in der Verschlußstellung gemäß Fig. 3 die beidseits des Längsschlitzes 4 liegenden Randbereiche 5 und 6 des Wellrohres 1 (vgl. Fig. 2) über einen maximalen Überdeckungsbereich ***a*** (in Umfangsrichtung) überdecken.

Fig. 1 zeigt das Wellrohr 1 in der Form, die es bei seiner Herstellung nach dem Verlassen des Corrugators und unmittelbar vor dem Einlauf in eine Schneidvorrichtung hat.

Das Wellrohr 1 ist dabei an seiner Außenseite mit umlaufenden Wellen 2 versehen, die aus abwechselnd aufeinander folgenden, in Umfangsrichtung umlaufenden Wellenbergen und Wellentälern bestehen, wobei diese Wellen 2 sich jedoch nicht über den gesamten Umfang erstrecken, wie dies die Fig. 1 und 2 zeigen, worauf verwiesen wird. Innerhalb eines bestimmten Umfangsbereiches ***a'*** sind ferner ebenfalls in Umfangsrichtung verlaufende Wellen 3 (mit Wellenbergen und Wellentälern) vorgesehen, die zwischen den in Umfangsrichtung einander gegenüberliegenden Enden der Wellen 2 und in deren Lage jeweils entsprechenden Lagen angebracht sind. Die Wellen 3 innerhalb dieses bestimmten Umfangsbereiches ***a'*** sind jedoch gegenüber den Wellen 2, die den ganzen restlichen Umfang des Wellrohres 1 bedecken, um einen Abstand 8 radial zum Inneren des Wellrohres 1 hin versetzt, so daß hier, wie die Darstellungen der Figuren 1 und 2 und insbesondere die vergrößerte Darstellung der Einzelheit ***A*** aus Fig. 1 in Fig. 4 zeigen, die radiale Unterseite der Wellentäler innerhalb dieses bestimmten Umfangsbereiches ***a'*** etwas in das Innere des Wellrohres 1 hin vorspringt.

Entsprechend findet sich, wie besonders aus Fig. 4 ersichtlich, an der radialen Außenseite des Wellrohres 1 dort am Ende jeder Welle 2 ein radial nach innen gerichteter Absatz 7, über den, ebenfalls radial nach innen versetzt, die Oberseite der Wellenberge der Wellen 3 in die der Wellen 2 anläuft bzw. in diese einmündet.

Der Längsschlitz 4 wird über eine Breite ***b*** in Umfangsrichtung aus dem Wellrohr 1 ausgeschnitten, wie dies in Fig. 2 gezeigt ist, worauf verwiesen wird: Der Längsschlitz 4 wird dabei so ausgeschnitten, daß er mit seiner einen Längsseite genau in dem Übergangsbereich liegt, an dem die Wellen 2 an einem der beiden Enden des Umfangsbereiches ***a'*** über den Abstand 8 und den Absatz 7 ineinander übergehen, wobei die andere Längsseite des Längsschlitzes 4 um die Breite ***b*** in Richtung auf das andere Ende des Umfangsbereiches ***a'*** hin versetzt liegt, so daß nach Einbringen des Längsschlitzes 4 dann noch ein vorgegebener Umfangsbereich ***a*** mit Wellen 2 verbleibt (mit a = a'-b).

Der radiale Abstand 8 und der radiale Absatz 7, die beide gleich groß sind, sind so gewählt, daß nach Anbringen des Längsschlitzes 4 entlang einer Längsmantellinie ***M* - *M*** (vgl. Fig. 1 und 2) anschließend bei einem Zusammendrücken der Randbereiche 5 und 6 des Wellrohres 1, die beidseits des Längsschlitzes 4 vorliegen, die radiale Unterseite 9 der Wellen 2 des Randbereiches 6 über die radiale Oberseite der Wellen 3 des anderen Randbereiches 5 aufgeschoben werden kann, wodurch der Längsschlitz 4 verschwindet und eine Überdeckung der Randbereiche 5 und 6 auftritt.

Dieses Zusammenschieben der Randbereiche 5 und 6 bei gleichzeitiger radialer Überdeckung derselben kann soweit erfolgen, wie dies in Fig. 3 dargestellt ist: Dort ist die dem Längsschlitz 4 zugewandte Schnittkante durch die Wellen 2 des Randbereiches 6 unter gleichzeitiger Überdeckung des anderen Randbereiches soweit in Umfangsrichtung auf letzterem verschoben, bis sie gegen den radialen Absatz 7 am Ende der dortigen Wellen 2 zur Anlage kommt.

Diese maximale Überdeckung der Randbereiche 5 und 6, die sich hier über den gesamten verbleibenden Umfangsbereich ***a*** erstreckt, führt zu einer Verschlußstellung des Wellrohres 1, wie sie in Fig. 3 gezeigt ist.

Es versteht sich von selbst, daß an dem dem Randbereich 6 zugewandten Ende des Umfangsbereiches ***a*** der Übergang zwischen den Wellen 2 und 3 geometrisch völlig gleich ausgebildet ist wie an dem gegenüberliegenden Ende des Umfangsbereiches ***a,*** wie dies in den Figuren 1 bis 3 links gezeigt ist:
Auch beim Übergang zwischen den Wellen 2 und 3 auf der dem Randbereich 6 zugewandten Seite des vorgegebenen Umfangsbereiches ***a*** des Wellrohres 1 liegen die Wellen 3 des Randbereiches 5 um den radialen Absatz 7 radial tiefer als die Wellen 2 am Randbereich 6, so daß nach Anbringen des Längsschlitzes 4 und bei einem völligen Überdecken beider Randbereiche 5, 6 zum Erreichen einer Verschlußstellung, wie sie in Fig. 3 gezeigt ist, sich eine Außenform für das Wellrohr 1 ergibt, die in Umfangsrichtung keine radiale Stufe zeigt.

Die in Fig. 3 dargestellte Verschlußstellung des Wellrohres 1 mit maximaler Überdeckung der Randbereiche 5 und 6 wird bei dessen Herstellung mittels thermischer Deformation in einer IR-Verformungsanlage (oder auch einer anderen, gleichermaßen für eine thermische Deformationsbehandlung geeignete Verformungsanlage) geschaffen, wobei nach der dann erfolgten Abkühlung das erzeugte Wellrohr 1 in dieser Anordnung, wie sie Fig. 3 zeigt, seine Ausgangsform für einen späteren Einsatz hat, worauf noch weiter unten getrennt eingegangen wird.

Die vergrößerte Darstellung der Einzelheit ***C*** aus Fig. 3, wie sie in Fig. 6 dargestellt ist, zeigt noch einmal im Einzelnen den örtlichen Zustand, wie er in diesem vergrößerten Bereich bei der in Fig. 3 wiedergegebenen Verschlußstellung des Wellrohres vorliegt.

Bei dem Wellrohr 1 entsprechend den Figuren 1 bis 6 ist dieses an seiner ganzen Innenseite mit einer weichen Schicht 10 versehen (vgl. auch Fig. 5 als vergrößerte Darstellung der Einzelheit ***B*** in Fig. 2), so daß nach Anbringen des Längsschlitzes 4 die gesamte radiale innenliegende Schlitzkante der Schnittflächen beidseits des Längsschlitzes 4 von einem weichen Material gebildet wird, somit auch die radialen Innenkanten an den Vorsprüngen 8 aus einem weichen Material bestehen.

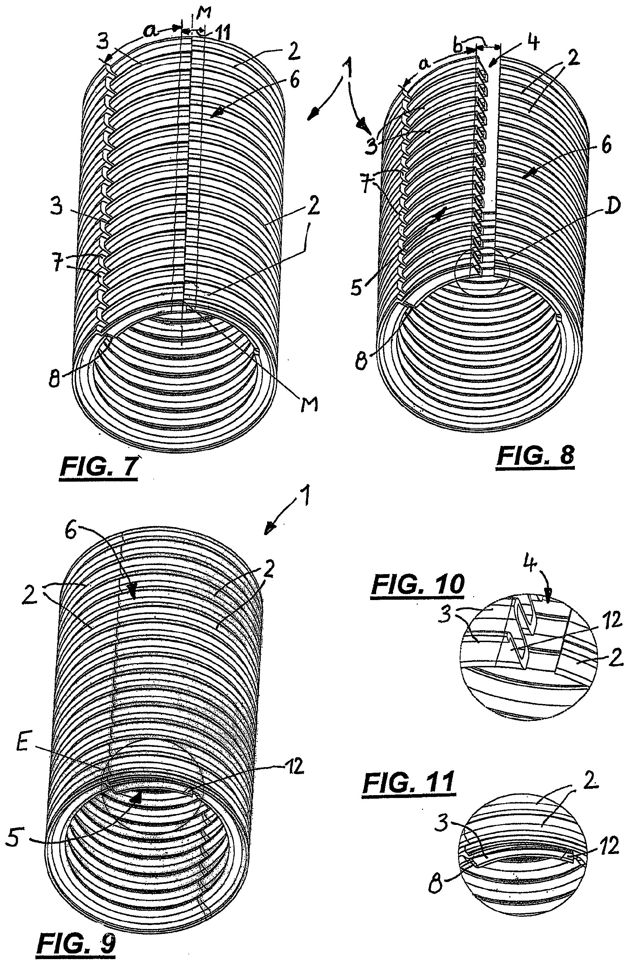

Die Ausführungsform des Wellrohres 1, wie sie in den Figuren 7 bis 11 gezeigt ist, unterscheidet sich von der aus den Figuren 1 bis 6 dadurch, daß hier nicht die ganze Innenfläche des Wellrohres 1 mit einer Schicht aus weicherem Material ausgekleidet ist, sondern daß das Wellrohr 1 beim Austritt aus dem Corrugator mit einem in Längsrichtung des Wellrohres 1 verlaufenden Längsstreifen 11 aus einem weicheren thermoplastischen Material als das restliche Material des Wellrohres 1 versehen ist, der aber über die gesamte radiale Wanddicke des Wellrohrs 1 verläuft.

Wie Fig. 7 zeigt, ist dieser Längsstreifen 11 aus weicherem Material entlang der Längsmantellinie ***M* - *M*** angeordnet, und zwar derart, daß er sich beidseits der Längsmantellinie ***M* - *M*** erstreckt.

Wenn dann, wie in Fig. 8 gezeigt, der Längsstreifen 4 in das Wellrohr 1 eingebracht wird, wird der Schnitt so gelegt, daß die dem Randbereich 6 zugewandte Schnittkante des Längsschlitzes 4 genau mit der dort liegenden Endkante des Streifens 11 zusammenfällt und damit, wie ein Vergleich der Figuren 7 und 8 zeigt, die dortige Schnittkante des Längsstreifens 4 innerhalb des Endabschnitts des Randbereiches 6 verläuft, so daß nach Ausführung des Schnittes an der Schnittkante dort kein weiches Material mehr an diesem Ende des Randbereiches 6 vorliegt.

Die gegenüberliegende Schnittfläche des Längsschnittes 4 verläuft, wie besonders gut aus der vergrößerten Darstellung der Einzelheit ***D*** in Fig. 10 ersichtlich, noch innerhalb des Bereiches weicheren Materials, so daß am dortigen Ende des Randbereiches 5 die ganze Schnittebene des Längsschnittes 4 innerhalb des weichen Bereiches liegt, weshalb, wie Fig. 10 zeigt, am dortigen Ende des Randbereiches 5 (mit den Wellen 3, die radial etwas vertieft sind) ein weicher Restabschnitt 12 verbleibt. Damit liegt die gesamte Schnittfläche des Längsschlitzes 4 dort im weichen Material und wird demgemäß auch vollständig von diesem weichen Material gebildet.

Hieraus wird erkennbar, daß die Breite ***b*** des Längsschlitzes 4 kleiner ist als die Breite des Streifens 11 weicheren Materiales, wodurch sichergestellt wird, daß nach Durchführung des Schlitzvorganges am Ende des Randbereiches 5, an dem die Wellen 3 ausgebildet sind, noch ein kleiner Endabschnitt 12 aus weicherem Material stehen bleibt (vgl. Fig. 10).

Fig. 9 zeigt nun wieder die Verschlußstellung des Wellschlauches 1 bei maximaler Überdeckung der Randbereiche 5 und 6, also den Zustand, bei dem der auf den Randbereich 5 aufgeschobene Randbereich 6 mit der an seinem Ende liegenden Schnittfläche gegen den radialen Absatz 7 am anderen Ende des Randbereiches 5 und damit gegen die dortige Endfläche der Wellen 2 zur Anlage kommt.

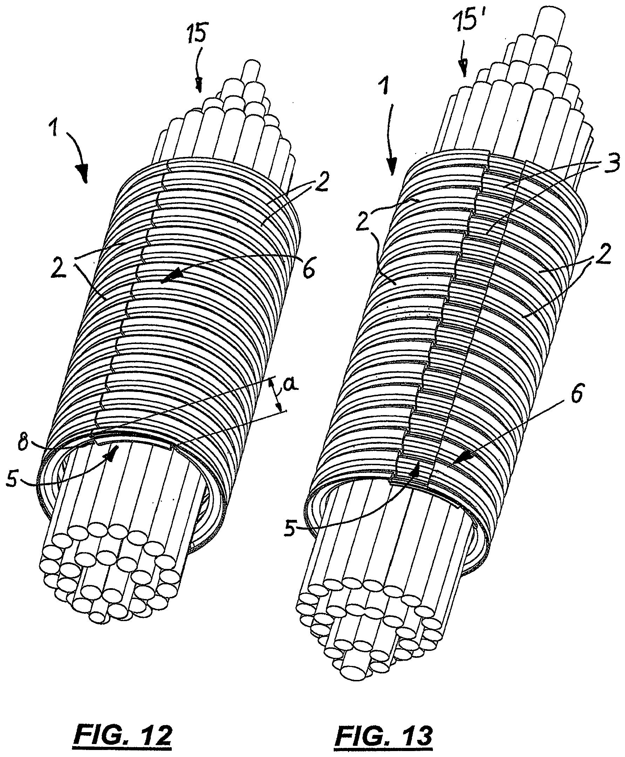

Die Ausführungsform für das Wellrohr 1, wie sie in den Figuren 12 und 13 dargestellt ist, zeigt ein Wellrohr 1, das weder mit einer weichen Innenschicht 10, noch mit einem Längsstreifen 11 aus weicherem Material versehen ist, sondern aus nur einem thermoplastischen Material gefertigt wurde.

Ähnlich wie bei der Darstellung nach den Figuren 1 bis 3 wird zunächst aus einem Extruder ein Kunststoffohr extrudiert und dann in einem nachgeschalteten Corrugator in eine Endform gebracht, wie sie der Darstellung gemäß Fig. 1 (allerdings ohne innenliegender weicher Schicht 10) entspricht.

Sodann wird entsprechend Fig. 2 entlang einer Längsmantellinie ***M*** - ***M*** ein Längsschlitz 4 (in den Figuren 12 und 13 nur verdeckt vorhanden) eingebracht und mit einer anschließenden thermischen Deformation in eine Verschlußstellung entsprechend Fig. 3 oder auch entsprechend der Darstellung der Fig. 12 gebracht, in der sich die Randbereiche 5, 6 vollständig über dem gesamten Umfangsbereich ***a*** radial überdecken.

Aus der Darstellung der Fig. 12 ist nun der Einsatz eines solchen Wellrohres 1 für die Aufnahme eines Bündels von Kabeln 15 gezeigt. Der Platzbedarf des Kabelbündels innerhalb des Wellrohres 1 ist so, daß im Verschlußzustand eine vollständige Überdeckung der Randbereiche 5 und 6 entlang des gesamten Umfangsbereiches ***a*** vorliegt.

Zum Einbringen der Kabel 15 wird das Wellrohr 1 aus seinem Ausgangszustand, wie er den Figuren 3 bzw. 9 bzw. 12 entspricht, mittels einer geeigneten Vorrichtung so weit gespreizt bzw. aufgeklappt, daß der Längsschlitz 4 geöffnet wird, durch den dann die Kabel 15 in das Innere des Wellrohres 1 eingebracht werden können.

Anschließend wird unter Entfallen der Spreizwirkung das Wellrohr 1, das infolge der thermischen Deformation in seine maximale Verschlußstellung entsprechend den Figuren 3 bzw. 9 bzw. 12 hin elastisch vorgespannt ist, durch die elastische Vorspannung in seine Verschlußstellung zurückgeklappt, wie sie in Fig. 12 gezeigt ist.

Wenn nun dasselbe Wellrohr 1 eine größere Anzahl von Kabeln, also ein dickeres Kabelbündel 15', aufnehmen soll, wie dies in Fig. 13 gezeigt ist, kann nach Einbringen der Kabel in das Wellrohr 1 bei der Freigabe der Spreizung ein Zurückfedern der Randbereiche 5 und 6 nicht mehr bis zu der in Fig. 12 gezeigten maximalen Überdeckung erfolgen, sondern es findet eine kürzere, nur teilweise Überdeckung beider Randbereiche 5, 6 statt, wie dies in Fig. 13 gezeigt ist. Aber auch in dieser Verschlußstellung werden die beiden Randbereiche 5, 6 durch die elastische Vorspannung sicher gehalten, so daß das Wellrohr 1 auch Kabelbündel, die einer größeren Nennweite als der, wie sie sich bei maximaler Verschlußstellung (entsprechend Fig. 3 oder 9 oder 12) ergibt, entsprechen, aufnehmen kann und nicht etwa ein anderes Wellrohr mit größerem Ausgangsdurchmesser hierfür eingesetzt werden muß.

Für die Ausbildung des Wellrohres 1 kann jedes geeignete thermoplastische Material verwendet werden, wobei als härteres Material insbesondere Polypropylen (PP) oder ein Polyamid (PA) mit einer Shore-D-Härte (nach ISO 868) größer als 60 und als weicheres Material z. B. ein thermoplastisches Elastomer (TPE) mit einer Shore-A-Härte kleiner 80 empfehlenswert sind.

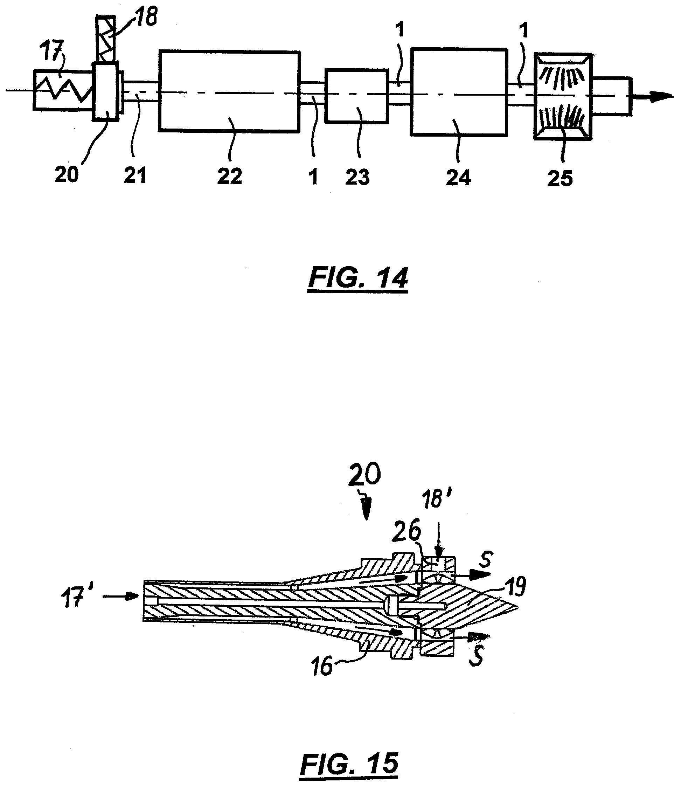

In Fig. 14 ist schließlich das Prinzip einer Anlage zur Herstellung solcher Wellrohre dargestellt.

Zur Herstellung wird zunächst aus einem Spritzwerkzeug (Spritzkopf) 20 ein Kunststoffrohr 21 extrudiert und dann einem nachgeschalteten Corrugator 22 bekannter Art zugeführt, in dem das Kunststoffrohr 21 in der gewünschten Weise mit am Umfang umlaufenden Wellungen versehen wird. An das Extrusionswerkzeug 20 sind ein erster Extruder 17 und ein zweiter Extruder 18 angeschlossen, wobei der erste Extruder 17 einen geeigneten thermoplastischen Kunststoff, etwa ein Polypropylen oder ein Polyamid mit einer Shore-D-Härte größer als 60, und der zweite Extruder 18 ein thermoplastisches Elastomer, das weicher ist und eine Shore-A-Härte kleiner als 80 aufweist, dem Spritzkopf 20 zufördert.

Aus dem Corrugator 22 tritt dann das gewellte Kunststoffrohr 1 aus, das in einer folgenden Schneidevorrichtung 23 entlang einer Mantellängslinie mit einem Längsschlitz versehen und anschließend einer Vorrichtung 24 zur thermischen Deformation, vorzugsweise einer IR-Verformungsanlage, zugeliefert wird, in welcher das geschlitzte Wellrohr auf eine Temperatur unterhalb der Schmelztemperatur des eingesetzten thermoplastischen Kunststoffes aufgeheizt und dann während eines Durchlaufs durch Verformungswalzen stufenweise in eine Endform überführt wird, bei der die Randbereiche 5, 6 beidseits des Längsschlitzes 4 in Umfangsrichtung zueinander in eine radiale Überdeckung gebracht werden, bis schließlich eine Überdeckungsstellung erreicht ist, in der eine vollständige Überdeckung des Bereiches radial tiefer liegender Wellen an dem einen Randbereich durch die radial höher liegenden Wellen am anderen Randbereich erfolgt ist.

Hiernach wird das Wellrohr 1 aus der IR-Verformungsanlage 24 einem nachgeschalteten Kühlsystem 25 mit einem geeigneten Kühlbad zugeführt, nach dessen Durchlaufen ein Aufwickeln des Wellschlauches 1 oder ein Ablegen desselben in voneinander abgetrennten Abschnitten erfolgt.

Beim Extrudieren des Kunststoffrohres 21 aus dem Extruder 17 besteht auch die Möglichkeit, hier eine Zweikomponenten-Extrusion durchzuführen, wobei in diesem Fall dem Spritzkopf 20 zwei unterschiedlich harte bzw. weiche thermoplastische Materialien zugeführt und in geeigneter Weise koextrudiert werden.

Soll z. B. ein Kunststoffrohr extrudiert werden, das einen streifenförmigen Längsabschnitt 11 aus einem zweiten, anderen thermoplastischen Material aufweist, dann kann dies in Koextrusion etwa dadurch erfolgen, daß im Spritzkopf des Extruders 17 ein Torpedoeinsatz zentral angebracht ist, der als Verdrängungskörper wirkt und die auftretende Schmelze aus dem Extruder 17 zu einem ringförmigen Rohr oder Schlauch 21 formt. Dabei wird über einen seitlichen Zuführkanal ein zweites thermoplastisches Material (etwa weicheres Material) radial von der Seite her in den Fluß der den Torpedo umlaufenden Schmelze eingeführt, das mit dieser koextrudiert wird, dadurch ein Streifen aus diesem anderen Material entlang dem extrudierten Kunststoffrohr 21 vorliegt und dann im nachgeschalteten Corrugator 22 die gewünschte Ausbildung mit Wellen über den Umfang hinweg erfolgen kann.

In Fig. 15 ist nur ganz prinzipiell ein Längsschnitt durch einen Spritzkopf 20 für eine ZweiKomponenten-Koextrusion dargestellt.

Dieser umfaßt einen Düsenkörper 16, in dem ein Torpedo 19 angeordnet ist, das beim Durchlauf der Kunststoffschmelze 17', die vom ersten Extruder 17 geliefert wird und den Hauptmaterialstrom darstellt, als Verdrängungskörper dient, um die aus dem Spritzkopf 20 austretende Kunststoffschmelze (Pfeile S) zu einem ringförmigen Rohr 21 zu formen.

Der zweite Extruder 18 preßt eine Kunststoffschmelze 18' aus einem weicheren Material über einen Zuführkanal 26 am Spritzkopf 20 in den Hauptmaterialstrom der vom Torpedo 19 radial nach außen verdrängten Kunststoffschmelze 17'. Dabei werden die beiden gut miteinander verträglich ausgewählten Kunststoffschmelzen 17' und 18' vereinigt und reagieren auch chemisch so, daß entlang des extrudierten Rohres 21 ein Längsstreifen aus weicherem Material gebildet ist, der aber fest mit dem härteren Material des sonstigen Rohres 21 verbunden ist.

## Patentansprüche

1. Wellrohr (1) aus Kunststoff zum Ummanteln von Leitungen (15), mit über seine Länge verteilten, abwechselnd aufeinander folgenden Wellen (2, 3) sowie mit einem entlang einer Mantellängslinie (M-M) verlaufenden Längsschlitz (4), wobei das Wellrohr (1) zum Einlegen der Leitungen (15) unter Freigabe des Längsschlitzes (4) in eine geöffnete Stellung und ferner in eine Verschlussstellung überführbar ist, in der sich beidseits des Längsschlitzes (4) liegende Randbereiche (5, 6) des Wellrohres (1) überdecken, wobei das Wellrohr (1) in Richtung auf die Einnahme seiner Verschlussstellung hin elastisch vorgespannt ist, und der Randbereich (5) des Wellrohres (1), der in Verschlussstellung radial unterhalb des anderen Randbereiches (6) des Wellrohres (1) liegt, innerhalb eines vorgegebenen Umfangsbereiches (a) an seinem Umfang mit Wellen (3) versehen ist, die im Vergleich zu den Wellen (2) außerhalb des vorgegebenen Umfangsbereiches (a) um einen Abstand (8) radial zu einem Inneren des Wellrohres (1) hin versetzt sind, so dass eine radiale Unterseite von Wellentälern der Wellen (3) innerhalb eines bestimmten Umfangsbereiches (a') etwas in das Innere des Wellrohres (1) hin vorspringt, und wobei die Wellen (3) so ausgebildet sind, dass sie in der Verschlussstellung mit der radialen Unterseite (9) der Wellen (2) des anderen Randbereiches (6) in Eingriff stehen, von denen sie in Umfangsrichtung relativ zueinander verschieblich übergriffen werden.

2. Wellrohr nach Anspruch 1, bei dem die in Eingriff miteinander befindlichen Wellen (2, 3) beider Randbereiche (5, 6) bei einer Verschiebebewegung relativ zueinander in Verschieberichtung formschlüssig aneinander geführt sind.

3. Wellrohr nach Anspruch 1 oder Anspruch 2, bei dem der in der Verschlussstellung radial untere der beiden Randbereiche (5) an seinem unmittelbar neben dem Längsschlitz (4) liegenden Endabschnitt (12) aus einem Material besteht, das weicher als das sonstige Material des Wellrohres (1) ist.

4. Wellrohr nach Anspruch 3, bei dem das weichere Material des Endabschnitts (12) aus einem thermoplastischen Elastomer (TPE) besteht und eine Shore-A-Härte von kleiner als 80 aufweist, während das sonstige Material des Wellrohres (1) Polypropylen (PP) mit einer Shore-D-Härte von mehr als 60 ist.

5. Wellrohr nach Anspruch 1, bei dem die Innenfläche mit einer Schicht (10) aus einem Material versehen ist, das weicher als das sonstige Material des Wellrohres (1) ist.

6. Wellrohr nach Anspruch 5, bei dem die Schicht (10) auf der Innenfläche aus einem thermoplastischen Elastomer mit einer Shore-A-Härte von kleiner als 80 besteht.

7. Wellrohr nach einem der Ansprüche 1 bis 6, bei dem in der Verschlussstellung bei völliger Überdeckung beider Randbereiche (5, 6) über den gesamten vorgegebenen Umfangsbereich (a) hinweg keine radiale Stoßstelle am Außenumfang des Wellrohres (1) vorliegt.

8. Verfahren zur Herstellung eines Wellrohres (1) mit folgenden Merkmalen:
- aus einem Extruder (17) wird über einen Spritzkopf (20) kontinuierlich ein Rohr (21) aus thermoplastischem Kunststoff extrudiert;
- das extrudierte Rohr (21) wird in einem nachgeschalteten Corrugator (22) zu einem Wellrohr (1) mit am Umfang ausgebildeten Wellen (2, 3) verformt, das auf einer Seite einer Mantellängslinie (M-M) über einen vorgegebenen Umfangsbereich (a) hinweg Wellen (3) aufweist, die gegenüber denen außerhalb dieses vorgegebenen Umfangsbereiches (a) um einen Abstand (8) radial zu einem Inneren des Wellrohres (1) hin versetzt sind, so dass eine radiale Unterseite von Wellentälern der Wellen (3) innerhalb eines bestimmten Umfangsbereiches (a') etwas in das Innere des Wellrohres (1) hin vorspringt;
- das Wellrohr (1) wird in einer dem Corrugator (22) nachgeschalteten Schlitzvorrichtung (23) mit einem entlang dieser Mantellängslinie (M-M) verlaufenden Längsschlitz (4) versehen;
- anschließend wird das längsgeschlitzte Wellrohr (1) durch eine IR-Verformungsanlage (24) geführt, in der es unter Erhitzung auf eine unterhalb der Schmelztemperatur des thermoplastischen Kunststoffs liegende Temperatur stufenweise und unter Überdeckung der beidseits des Längsschlitzes (4) liegenden Randbereiche (5, 6) des Wellrohres (1) in eine vorgegebene Verschlussstellung gebracht wird, so dass die beidseits des Längsschlitzes (4) liegenden Randbereiche (5, 6) derart miteinander in Eingriff kommen, dass sie in Umfangsrichtung relativ zueinander verschieblich sind;
- direkt nachdem das Wellrohr (1) in die vorgegebene Verschlussstellung überführt wurde, wird es einem anschließenden Kühlsystem (25) zugeführt und dort abgekühlt;
- anschließend wird das Wellrohr (1) als Meterware aufgewickelt oder in vorgegebene Abschnitte abgeschnitten.

9. Verfahren nach Anspruch 8 zur Herstellung eines Wellrohres (1), bei dem der in der Verschlussstellung radial untere der beiden Randbereiche (5) an seinem unmittelbar neben dem Längsschlitz (4) liegenden Endabschnitt (12) aus einem Material besteht, das weicher als das sonstige Material des Wellrohres (1) ist, wobei bei dem Verfahren dem Spritzkopf (20) noch ein zweiter thermoplastischer Kunststoff aus einem zweiten Extruder (18) zugeführt wird, der weicher als der andere aus dem Extruder (17) zugeführte thermoplastische Kunststoff ist, wobei das aus dem Spritzkopf (20) extrudierte Kunststoffrohr (21) entlang der Mantellängslinie (M-M) aus einem sich über eine vorgegebene Umfangsbreite erstreckenden Längsstreifen (11) aus dem weicheren thermoplastischen Kunststoff besteht, während der restliche Mantel von dem anderen thermoplastischen Kunststoff gebildet wird, und wobei der Längsschlitz (4) in der Schlitzvorrichtung (24) so angebracht wird, dass seine den Wellen (2) des in der Verschlussstellung radial außen liegenden Randbereiches (6) des Wellrohres (1) zugewandte Längsseite mit der dortigen Längsseite des weicheren Längsstreifens (11) des Wellrohres (1) zusammenfällt und der Längsschlitz (4) in Umfangsrichtung des Wellrohres (1) mit einer Breite (b) ausgeschnitten wird, die kleiner ist als die Umfangsbreite des Längsstreifens (11).

10. Verfahren nach Anspruch 9 zur Herstellung eines Wellrohres (1), bei dem das weichere Material des Endabschnitts (12) aus einem thermoplastischen Elastomer (TPE) besteht und eine Shore-A-Härte von kleiner als 80 aufweist, während das sonstige Material des Wellrohres (1) Polypropylen (PP) mit einer Shore-D-Härte von mehr als 60 ist.

11. Verfahren nach Anspruch 9 oder 10, bei dem der in der Schlitzvorrichtung (24) an dem Wellrohr (1) angebrachte Längsschlitz (4), in geöffnetem Zustand, eine Breite (b) von 3 mm bis 5 mm aufweist.

## Claims

1. Corrugated tube (1) made of plastic for sheathing wires (15), comprising corrugations (2, 3) distributed over its length and alternately following one another, and comprising a longitudinal slot (4) running along a circumferential longitudinal line (M-M), wherein the corrugated tube (1) is transferable into an open position for insertion of the wires (15), with release of the longitudinal slot (4), and also into a closed position in which edge regions (5, 6) of the corrugated tube (1) lying on both sides of the longitudinal slot (4) overlap, wherein the corrugated tube (1) is elastically prestressed in the direction of taking its closed position, and the edge region (5) of the corrugated tube (1) lying radially below the other edge region (6) of the corrugated tube (1) in the closed position within a predetermined circumferential region (a) is provided on its circumference with corrugations (3) which are offset radially towards an interior of the corrugated tube (1) by a distance (8) in comparison with the corrugations (2) outside the predetermined circumferential region (a), so that a radial underside of corrugation valleys of the corrugations (3) within a specific circumferential region (a') projects somewhat towards the interior of the corrugated tube (1), and wherein the corrugations (3) are formed such that, in the closed position, they engage the radial underside (9) of the corrugations (2) of the other edge region (6), by which they are overlapped in a circumferentially displaceable manner relative to one another.

2. Corrugated tube according to claim 1, in which the corrugations (2, 3) of both edge regions (5, 6), which are in engagement with one another, are guided positively against one another during a displacement movement relative to one another in the direction of displacement.

3. Corrugated tube according to claim 1 or claim 2, in which the radially lower one of the two edge regions (5) in the closed position consists, at its end portion (12) lying immediately adjacent to the longitudinal slit (4), of a material which is softer than the other material of the corrugated tube (1).

4. Corrugated tube according to claim 3, wherein the softer material of the end portion (12) is a thermoplastic elastomer (TPE) and comprises a Shore A hardness of less than 80, while the other material of the corrugated tube (1) is polypropylene (PP) with a Shore D hardness of more than 60.

5. Corrugated tube according to claim 1, wherein the inner surface is provided with a layer (10) of a material which is softer than the other material of the corrugated tube (1).

6. Corrugated tube according to claim 5, wherein the layer (10) on the inner surface comprises a thermoplastic elastomer comprising a Shore A hardness of less than 80.

7. Corrugated tube according to one of claims 1 to 6, wherein, in the closed position, with both edge regions (5, 6) completely covered over the entire predetermined circumferential region (a), there is no radial abutment on the outer circumference of the corrugated tube (1).

8. Method for producing a corrugated tube (1) comprising the following features:
- from an extruder (17), a tube (21) of thermoplastic material is continuously extruded via an extrusion die head (20);
- the extruded tube (21) is formed in a downstream corrugator (22) into a corrugated tube (1) with corrugations (2, 3) formed on the circumference, which has corrugations (3) on one side of a circumferential longitudinal line (M-M) over a predetermined circumferential region (a), which are offset radially towards an interior of the corrugated tube (1) by a distance (8) relative to those outside this predetermined circumferential region (a), so that a radial underside of corrugation valleys of the corrugations (3) within a certain circumferential region (a') projects somewhat towards the interior of the corrugated tube (1);
- the corrugated tube (1) is provided with a longitudinal slit (4) running along this circumferential longitudinal line (M-M) in a slitting device (23) downstream of the corrugator (22);
- the longitudinally slit corrugated tube (1) is then passed through an IR forming apparatus (24) in which it is gradually brought into a predetermined closure position by heating it to a temperature below the melting temperature of the thermoplastic material and by covering the edge regions (5, 6) of the corrugated tube (1) lying on both sides of the longitudinal slit (4), so that the edge regions (5, 6) lying on both sides of the longitudinal slot (4) engage with one another in such a way that they are displaceable relative to one another in the circumferential direction;
- directly after the corrugated tube (1) has been transferred to the predetermined closing position, it is fed to a subsequent cooling system (25) and cooled there;
- the corrugated tube (1) is then wound up by the meter or cut into predetermined sections.

9. Method according to claim 8 for producing a corrugated tube (1), in which the radially lower one of the two edge regions (5) in the closed position consists at its end portion (12) lying immediately adjacent to the longitudinal slot (4) of a material which is softer than the other material of the corrugated tube (1), wherein during the method, the injection die head (20) is also supplied with a second thermoplastic material from a second extruder (18) which is softer than the other thermoplastic fed from the extruder (17), wherein the plastic tube (21) extruded from the extrusion die head (20) consists, along the circumferential longitudinal line (M-M), of a longitudinal strip (11) of the softer thermoplastic extending over a predetermined circumferential width while the remaining sheath is formed by the other thermoplastic, and wherein the longitudinal slit (4) in the slitting device (23) is so arranged that its longitudinal side facing the corrugations (2) of the edge region (6) of the corrugated tube (1) lying radially on the outside in the closed position coincides with the longitudinal side there of the softer longitudinal strip (11) of the corrugated tube (1) and the longitudinal slot (4) is cut out in the circumferential direction of the corrugated tube (1) with a width (b) which is smaller than the circumferential width of the longitudinal strip (11).

10. Method according to claim 9 for producing a corrugated tube (1), wherein the softer material of the end portion (12) is a thermoplastic elastomer (TPE) and comprises a Shore A hardness lower than 80, while the other material of the corrugated tube (1) is polypropylene (PP) with a Shore D hardness higher than 60.

11. Method according to claim 9 or 10, wherein the longitudinal slit (4) provided by means of the slitting device (23) on the corrugated tube (1) has, in the opened state, a width (b) of 3 mm to 5 mm.

## Revendications

1. Gaine annelée (1) en matière plastique pour le gainage de conducteurs (15), avec des annelures (2, 3) réparties sur sa longueur et se succédant en alternant et avec une fente longitudinale (4) s'étendant le long d'une ligne longitudinale de gainage (M-M), la gaine annelée (1) pouvant être amenée dans une position ouverte pour l'introduction des conducteurs (15) en libérant la fente longitudinale (4) ainsi que dans une position fermée dans laquelle des zones de bordure (5, 6) de la gaine annelée (1) situées de part et d'autre de la fente longitudinale (4) se chevauchent, la gaine annelée (1) étant précontrainte élastiquement dans la direction de prise de sa position fermée, et la zone de bordure (5) de la gaine tubulaire (1) qui se trouve, dans la position fermée, radialement sous l'autre zone de bordure (6) de la gaine tubulaire (1), est pourvue à l'intérieur d'une zone périphérique prédéterminée (a) d'annelures (3) sur sa périphérie, lesquelles sont décalées radialement d'une distance (8) vers l'intérieur de la gaine tubulaire (1) par rapport aux annelures (2) à l'extérieur de la zone périphérique prédéterminée (a), de sorte qu'une face inférieure radiale des creux des annelures (3) fasse quelque peu saillie à l'intérieur d'une zone périphérique déterminée (a') à l'intérieur de la gaine annelée (1), et dans laquelle les annelures (3) sont réalisées de telle sorte qu'elles soient en prise, en position fermée, avec la face inférieure radiale (9) des annelures (2) de l'autre zone de bordure (6) par lesquelles elles sont recouvertes d'une manière leur permettant de se déplacer les unes par rapport aux autres dans la direction périphérique.

2. Gaine annelée selon la revendication 1, dans laquelle les annelures (2, 3) des deux zones de bordure (5, 6) se trouvant en prise les unes avec les autres sont amenées en complémentarité de forme les unes par rapport aux autres, lors d'un déplacement de fermeture des unes par rapport aux autres dans la direction de déplacement.

3. Gaine annelée selon la revendication 1 ou la revendication 2, dans laquelle, la partie inférieure des deux zones de bordure (5) radialement dans la position fermée est constituée à sa section d'extrémité (12) se trouvant immédiatement à côté de la fente longitudinale (4) d'un matériau qui est plus mou que le reste du matériau de la gaine annelée (1).

4. Gaine annelée selon la revendication 3, dans laquelle le matériau plus mou de la section d'extrémité (12) est constitué d'un élastomère thermoplastique (ETP) et présente une dureté Shore-A inférieure à 80, tandis que le reste du matériau constituant la gaine annelée (1) est en polypropylène (PP) ayant une dureté Shore-D de plus de 60.

5. Gaine annelée 1, dans laquelle la face intérieure est pourvue d'une couche (10) constituée d'un matériau qui est plus mou que le reste du matériau constituant la gaine annelée (1).

6. Gaine annelée selon la revendication 5, dans laquelle la couche (10) est constituée sur la face intérieure d'un élastomère thermoplastique ayant une dureté Shore-A inférieure à 80.

7. Gaine annelée selon l'une des revendications 1 à 6, dans laquelle dans la position fermée avec un chevauchement total des deux zones de bordure (5, 6) sur toute la zone périphérique prédéterminée (a), il n'y a aucun point de contact radial sur le périmètre extérieur de la gaine annelée (1).

8. Procédé de fabrication d'une gaine annelée (1) ayant les caractéristiques suivantes :
- une gaine (21) est extrudée en continu sur une extrudeuse (17) à l'aide d'une tête d'extrusion (20) à partir d'un matériau thermoplastique ;
- la gaine extrudée (21) est mise en forme de gaine annelée (1) avec des annelures formées dans la périphérie, dans un appareil à anneler (22) situé en aval et elle présente, d'un côté d'une ligne longitudinale de gainage (M-M) sur une zone périphérique prédéterminée (a) des annelures (3) qui sont décalées par rapport à celles situées à l'extérieur de cette zone périphérique prédéterminée (a) radialement d'une distance (8) vers l'intérieur de la gaine annelée (1), de sorte qu'une face inférieure radiale des creux des annelures (3) à l'intérieur d'une zone périphérique déterminée (a') radiale fasse quelque peu saillie à l'intérieur de la gaine annelée (1) ;
- la gaine annelée (1) est pourvue dans un dispositif de découpage (23) connecté en aval de l'appareil à anneler (22) d'une fente longitudinale (4) s'étendant le long de cette ligne longitudinale de gainage (M-M) ;
- puis la gaine annelée fendue (1) est amenée par une installation de mise en forme par IR (24), dans laquelle elle est amenée pas à pas dans une position fermée par chauffage à une température en-dessous de la température de fusion du matériau thermoplastique et avec chevauchement des zones de bordures (5, 6) de la gaine annelée (1) situées des deux côtés de la fente longitudinale (4), de sorte que les zones de bordure (5, 6) situées des deux côtés de la fente longitudinale (4) viennent en prise l'une avec l'autre de telle manière qu'elles puissent être déplacées l'une par rapport à l'autre dans la direction de la périphérie ;
- immédiatement après que la gaine annelée (1) a été amenée dans la position fermée prédéterminée, elle est amenée dans un système de refroidissement annexé (25) et y est refroidie ;
- ensuite, la gaine annelée (1) est enroulée comme marchandise au mètre ou est découpée en tronçons prédéterminés.

9. Procédé selon la revendication 8 pour la production d'une gaine annelée (1), dans lequel la partie inférieure radiale en position fermée des deux zones de bordure (5) est constituée dans sa section d'extrémité (12) située immédiatement à côté de la fente longitudinale (4) d'un matériau qui est plus mou que le reste du matériau constituant la gaine annelée (1), dans lequel, lors du processus, il est apporté à la tête d'extrusion (20) encore un deuxième matériau thermoplastique provenant d'une deuxième extrudeuse (18) et qui est plus mou que l'autre matériau thermoplastique amené à l'aide de l'extrudeuse (17), la gaine en matière plastique (21) extrudée provenant de la tête d'extrusion (20) étant constituée, le long de la ligne longitudinale de gainage (M-M) d'une bande longitudinale (11) s'étendant sur une largeur périphérique prédéterminée, du matériau thermoplastique plus mou, tandis que le reste du gainage est formé de l'autre matériau thermoplastique, et la fente longitudinale (4) est amenée dans la position fermée (24) de telle manière que son côté longitudinal tourné vers les annelures (2) des zones de bordure (6) de la gaine annelée (1) se trouvant radialement à l'extérieur dans la position fermée, tombe avec le côté longitudinal à cet endroit de la bande longitudinale (11) plus molle de la gaine annelée (1) et que la fente longitudinale (4) soit découpée dans la direction périphérique de la gaine annelée (1) avec une largeur (b) qui est inférieure à la largeur périphérique de la bande longitudinale (11).

10. Procédé selon la revendication 9 pour la fabrication d'une gaine annelée (1), dans lequel le matériau le plus mou de la section d'extrémité (12) est constitué d'un élastomère thermoplastique (ETP) et a une dureté Shore-A inférieure à 80, tandis que le reste du matériau de la gaine annelée (1) est du propylène (PP) avec une dureté Shore-D de plus de 60.

11. Procédé selon la revendication 9 ou 10, dans lequel la fente longitudinale (4) réalisée par le dispositif de découpage (24) sur la gaine annelée (1) présente, à l'état ouvert, une largeur (b) de 3 mm à 5 mm.
